# EUROPEAN PATENT APPLICATION

(11) **EP 4 015 541 A1**
(43) Date of publication of application: **22.06.2022**
(21) Application number: 20213996.0
(22) Date of filing: 15.12.2020
(51) Int. Cl.: C08F 2/30, C08F 220/18

(54) **MINIEMULSIONS COMPRISING SUPERHYDROPHOBIC AND/OR HYDROPHOBIC MONOMERS, METHOD OF PREPARING THE SAME AND USE THEREOF**

(71) Applicant: Clariant International Ltd, 4132 Muttenz (CH)
(72) Inventor: PITARCH LOPEZ, Jesus, 60431 Frankfurt am Main (DE); SEIFERTH, Laura, 61118 Bad Vilbel (DE); SAHL, Mike, 65520 Bad Camberg (DE); STOPPEL, Yasemin, 65929 Frankfurt (DE)
(74) Representative: Mikulecky, Klaus

(57) **Abstract**

The invention relates to a method for preparing oil-in-water miniemulsions comprising monomer droplets with a mean diameter in the range of from 50 to 1000 nm, wherein the monomer droplets comprising superhydrophobic and/or hydrophobic monomers. The method comprises the addition of adding an oil phase to an emulsifier system, wherein the oil phase comprises at least 5 wt.-% to 100 wt.-% of one or more superhydrophobic monomers and/or hydrophobic monomers and 0 wt.-% to 60 wt.-% of hydrophilic monomers and the emulsifier system comprises at least one glucamide surfactant or a mixture of surfactants comprising at least 20 wt.-% and less than 100 wt.-% of the at least one glucamide surfactant and more than 0 wt.-% to 80 wt.-% of at least one anionic surfactant, and water, until gel formation is observed, and diluting the obtained gel with an aqueous phase.

Further embodiments are miniemulsions prepared by the described method and their use for the preparation of polymer dispersions which can be used as binders for paints or coatings.

## Description

### Field of the invention

The invention relates to a method for preparing oil-in-water miniemulsions comprising monomer droplets with a mean diameter in the range of from 50 to 1000 nm, wherein the monomer composition forming the droplets comprises superhydrophobic monomers. Further embodiments of the invention are miniemulsions prepared by the described method and their use for the preparation of polymer dispersions.

### Background of the invention

Emulsion polymerization is a widely used process for the production of aqueous polymer dispersions. An emulsion polymerisation is a radical polymerization carried out in aqueous monomer dispersions. The most common type of emulsion polymerization is the polymerisation of oil-in-water emulsions, in which droplets of monomer (oil phase) are emulsified with surfactants in a continuous phase of water. The monomer dispersion comprises relatively large droplets of monomer and relatively small micelles of excess surfactant. Small amounts of monomer diffuse through the water to the small micelles where the monomers are polymerised by a water-soluble initiator. The final product is a dispersion of polymer particles in water. It can also be known as a polymer, latex, or polymer emulsion.

The use of sugar-based surfactants, such as alkyl-N-methylglucosamides, for example in detergents and cosmetic products is described in the literature (F.W. Lichtenthaler, "Carbohydrates as Organic Raw Materials" in Ullmann's Ullmann's Encyclopedia of Industrial Chemistry, Wiley-VCH Verlag, 2010).

DE 199 34 836 C1 and corresponding EP 1 072 615 A1 disclose use of glucamides of fatty acids as emulsifiers in emulsion polymerization. These documents disclose oil-in-water emulsions and the polymerization of ethylenically unsaturated monomers present in such emulsions. The emulsion polymerization comprises preparing an aqueous emulsifier system, adding polymerization initiator and monomer, starting the polymerization by rising the temperature and adding further monomer until the emulsion is finished. Preparation of miniemulsions comprising sub-micron particles is not disclosed.

A crucial requirement for emulsion polymerisations is the monomer transport through the aqueous phase. A certain water-solubility of the monomers is required to allow diffusion from large monomer droplets to the small micelles, wherein polymerisation takes place. Vice versa large monomer droplets are not detrimental for the preparation of a dispersion of polymer nanoparticles or a latex dispersion. Monomer compositions for the preparation of latex dispersions comprising large droplets of monomers with sufficient water-solubility can be easily obtained by stirring the monomers in the presence of surfactants or protective colloids.

However, common emulsion polymerisation methods are not suitable for the polymerisation of superhydrophobic and/or of hydrophobic monomers having very low or low water-solubility. For the preparation of dispersions comprising polymer nanoparticles derived from superhydrophobic and/or hydrophobic monomers miniemulsion polymerisation methods are developed wherein the polymerisation takes place directly in the monomer droplets. Therefore monomer emulsions are required comprising submicron monomer droplets.

A common technique of preparing miniemulsions is to break up the droplets of a coarse emulsion produced by conventional agitation to submicron size droplets using high energy devices, such as sonicators, high pressure homogenizers or high shear mixers. An implementation of such methods at an industrial scale is difficult because special equipment is required for miniemulsification and energy consumption is high (Asua, Jose M., Challenges for industrialization of miniemulsion polymerization, Progress in Polymer Science 39 (2014), 1797-1826). Moreover, the time to achieve the required small monomer droplet size at large scale is typically long, which impacts negatively the economically viability of the overall manufacture process of the polymer dispersion.

Further methods have been reported to achieve emulsion polymerization of superhydrophobic monomers, comprising the use of either toxic solvents, phase transfer agents, such as cyclodextrines, or polymeric seeds.

A further method for the preparation of miniemulsions is described by Boscán, F. et al. (From miniemulsion to nanoemulsion polymerization of superhydrophobic monomers through low energy phase inversion temperature, Journal of Industrial and Engineering Chemistry 58 (2018) 1-8). According to Boscán, F. et al. monomer miniemulsions are obtainable by heating a coarse oil-in-water emulsion comprising a superhydrophobic monomer until phase inversion to a water-in-oil emulsion is achieved. Phase inversion is detected by a sharp decrease of the conductivity of the emulsion. After phase inversion the emulsion was cooled, returning to an oil-in-water miniemulsion. Typical phase inversion temperatures for appropriate non-ionic emulsifiers are in the range of 60°C to 90°C. The upper limit is established by the boiling point of the continuous phase, the lower limit is set by the reaction temperature, which must be lower than the phase inversion temperature (PIT). A further phase inversion method for the formation of miniemulsions is described by Elgammal M., Preparation of latex nanoparticles using nanoemulsion obtained by the phase inversion composition (PIC) method and their application in textile printing, Colloids and Surfaces A: Physicochem. Eng. Aspects 470, (2015), 70-79.

US 2004/0054111 A1 discloses nanoscale polymerized hydrocarbon particles and methods of making and using such particles. According to this document very small particles having weight average diameters of 30 nm or less can be prepared when using non-ionic surfactants and non-ionic initiators without any ionic additive. Different classes of non-ionic surfactants are mentioned in this document, for example polyoxyethylenated alkylphenols, polyoxyethylenated straight-chain or secondary alcohols, long-chain carboxylic acid esters as well as glyceryl and polyglyceryl esters of natural fatty acids.

Therefore, aqueous polymerization of superhydrophobic monomers, such as iso-bornyl-, lauryl- and stearyl-acrylate and -methacrylate can only be achieved by making use of sophisticated methods which demand either high energy consumption and/or high concentration of emulsifier a fact which hampers the development and implementation of new aqueous polymer dispersions based on such materials in application areas such as paints and coatings, where an incipient need for environmentally friendly high performance materials exists.

Surprisingly, it has been found that by making use of particular emulsifiers miniemulsions prepared by using the above mentioned superhydrophobic or hydrophobic monomers and combinations thereof with other monomers can be readily prepared without need of making use of high-energy emulsification devices and with a low emulsifier content and lower temperature in comparison to low-energy emulsification methods known from the prior art.

Moreover, it has been found that the miniemulsions and the polymer dispersions resulting from this manufacturing method are characterized by narrow particle size distributions.

Therefore, it is an object of the present invention to provide an improved method for the preparation of miniemulsions, said method being especially suitable for upscaling for industrial applications.

### Description of the invention:

The problem is solved by a method for preparing miniemulsions of superhydrophobic monomers and/or hydrophobic monomers as described below. The obtained miniemulsions can be stored or directly used for the preparation of corresponding polymer dispersions.

The invention relates to a method for preparing an oil-in-water miniemulsion comprising monomer droplets with a mean diameter in the range of from 50 to 1000 nm, preferably from 50 nm to 800 nm, more preferably from 50 to 500 nm and particularly preferred from 100 to 300 nm wherein the method comprises the steps of
(a) stirring an emulsifier system comprising
   (i) at least one glucamide surfactant, and
   (ii) water,
      and adjusting the temperature of the emulsifier system to a range between 0°C and 50°C,
(b) adding an oil phase to the emulsifier system (a), wherein the oil phase comprises at least 5 wt.-% to 100 wt.-% of one or more superhydrophobic monomers and/or hydrophobic monomers and 0 wt.-% to 60 wt.-% of hydrophilic monomers, until gel formation occurs, and
(c) diluting the gel obtained in step (b) with an aqueous phase under stirring at a temperature between 0°C and 50°C, wherein a miniemulsion comprising the superhydrophobic and/or hydrophobic monomers is obtained.

In a preferred variant of the process of the invention an emulsifier system is used which is mixture of surfactants comprising at least 20 wt.-% and less than 100 wt.-% of the at least one glucamide surfactant and more than 0 wt.-% to 80 wt.-% of at least one anionic surfactant.

Glucamide surfactants used in the emulsifier system of the method of this invention are known substances.

Preferred glucamide surfactants are N-hydrocarbon substituted-N-acylglucamides of formula (I) 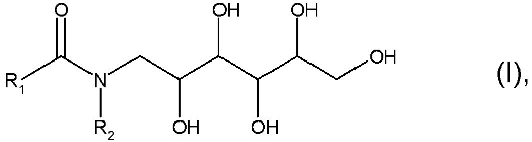 wherein
- R₁: is alkyl, alkenyl, cycloalkyl, aryl or aralkyl group, preferably a linear or branched alkyl group comprising 4 to 21 carbon atoms, preferably 5 to 18 carbon atoms, and most preferably 5 to 9 carbon atoms, or preferably a linear or branched alkenyl group comprising 4 to 21 carbon atoms, preferably 5 to 18 carbon atoms, and most preferably 5 to 9 carbon atoms, and
- R₂: is a linear or branched alkyl group or an aryl group, preferably a linear alkyl group comprising 1 to 8 carbon atoms or a phenyl group, more preferred a methyl, ethyl, propyl or butyl group and most preferred a methyl group,

Very preferred glucamide surfactants are N-methyl substituted-N-acylglucamides of formula (I), wherein R¹ is a linear alkyl group comprising 5 to 9 carbon atoms, preferably a mixture of linear alkyl groups comprising 5 or 7 carbon atoms, and R² is methyl.

The glucamides used in the method of this invention may be prepared by methods well-known to the person skilled in the art and/or are commercially available.

In general, these glucamides are prepared by reacting C₆-polyhydroxy compounds with amides of fatty acids.

The preparation of glucamides is carried out, for example, by reacting the corresponding sugars available from reductive sugars, such as N-methylglucamine, with commercially available carboxylic acid methyl esters. A corresponding manufacturing process is described, for example, in EP-A 0 550 637.

The pentahydroxyhexyl residue in the glucamide surfactant used in the method of this invention has different chiral centers, so that several stereoisomers can exist at a time. Usually, the glucamides are produced from naturally occurring sugars, such as the D-glucose, but basically also the use of other natural or synthetic hexoses or other C6 building blocks is possible, so that different stereoisomers of glucamides can result.

The glucamide surfactants used in the process of this invention are characterized by an advantageous toxicological and ecological profile. They have a low solubility in water but are self-emulsifying in water and form stable homogeneous emulsions.

In one embodiment of in the inventive method the emulsifier system consists of glucamide surfactant(s) only But in a preferred embodiment of the inventive method the emulsifier system comprises besides one or more glucamide surfactants additionally anionic surfactants.

Examples of anionic surfactants are sulfonates of alkylbenzene-sulfonates, alkanesulfonates, olefinsulfonates, alkyl ether sulfate, alkyl sulfate, sulfosuccinates, alkyl phosphates, alkyl ether phosphates, protein fatty acid condensates, preferably collagen hydrolysates modified with fatty acid, amino acid-based surfactants, isethionates, taurides, acyl lactylates, neutralized fatty acids or combinations thereof.

The anionic surfactants are preferably selected from the group of phosphate esters of alkoxylated aliphatic or aromatic alcohols. Particularly anionic surfactants selected from the group of phosphate esters of compounds of formula (II)

H-(OA)ₘ-O-(CR₂)ₙ-CR₃ (II)

wherein
one or two of the residues R
   are a methyl or ethyl group and
the other residues R
   are hydrogen or
all of the residues R
   are hydrogen,
the groups (OA)
   are selected from the group of ethylene oxide, propylene oxide, butylene oxide and mixtures thereof, and
m is an integer from 2 to 20, and
n is an integer from 5 to 21.

A very preferred emulsifier system comprises at least one glucamide surfactant of formula (I), wherein R¹ is a linear alkyl group comprising 5 to 9 carbon atoms, preferably a mixture of linear alkyl groups comprising 5 or 7 carbon atoms, and R² is methyl, and at least one phosphate ester of ethoxylated aliphatic alkanol having 11 to 16 carbon atoms in the alkanol moiety, preferably at least one phosphate ester of iso-tridecanol ethoxylate.

If the emulsifier system comprises a mixture of glucamide surfactant and anionic surfactant, the amount of anionic surfactant, based on the total amount of surfactant in the emulsifier system, is preferably from 10 wt.-% to 80 wt.-%, particularly from 15 wt.-% to 35 wt.-%, and the amount of glucamide surfactant, based on the total amount of surfactant in the emulsifier system, is preferably from 20 wt.-% to 90 wt.-%, particularly from 65 wt.-% to 85 wt.-%.

In an alternative embodiment the amount of anionic surfactant, based on the total amount of surfactant in the emulsifier system, is from 65 wt.-% to 80 wt.-%, and the amount of glucamide surfactant, based on the total amount of surfactant in the emulsifier system, is from 20 wt.-% to 35 wt.-%.

The emulsifier system described herein is particularly useful for providing a miniemulsion of superhydrophobic and/or hydrophobic monomers. The emulsifier system surprisingly allows the preparation of oil-in-water miniemulsions of superhydrophobic and/or hydrophobic monomers without using high shear stirring, high pressure homogenization and without heating to phase inversion (PIT). Moreover, the emulsifier system is incorporated in the aqueous phase and not in the monomer phase like in the PIC process. In addition the emulsification can be carried out in aqueous phase in the absence of toxic solvents and in the absence of phase transfer agents.

The emulsifier system optionally comprises with water miscible co-solvents. Suitable co-solvents are, for example, methanol, ethanol, propanol, butanol, benzyl alcohol, ethylene glycol, di-ethylene glycol, propylene glycol, di-propylene glycol, glycerol, polyethylene glycol, polypropylene glycol, and mono-methyl ether or di-methyl ether of ethylene glycol or propylene glycol.

The amount of water in the emulsifier system is at least 10 wt.-% and up to 90 wt.-%, preferably from 20 wt.-% to 60 wt.-%. If a water miscible co-solvent is added to the emulsifier system, the amount of the co-solvent is usually in the range of from 10 wt.-% to 50 wt.-%, preferably of from 15 wt.-% to 35 wt.-% and the amount of water is preferably from 10 wt.-% to 60 wt.-% and more preferably from 20 wt.-% to 40 wt.-% based on the total amount of the emulsifier system. The water-miscible co-solvent is typically present in an amount of less than 50 wt.-%, preferably less than 35 wt.-% based on the total amount of the emulsifier system.

The total amount of glucamide surfactant or of a combination of glucamide surfactant and anionic surfactant in the emulsifier system is usually in the range of from 10 wt.-% to 90 wt.-%, particularly in the range of from 20 wt.-% to 60 wt.-%.

In a preferred embodiment the emulsifier system consists of the glucamide surfactant of above-defined formula (I) or mixtures thereof,
optionally an anionic surfactant,
optionally a water-miscible co-solvent, and
water.

In another embodiment of the described method further surfactants which are different from the glucamide and anionic surfactants described above can be added to the emulsifier system in an amount of less than 20 wt.-%, preferably less than 10 wt.-% or less than 5 wt.-%, based on the total amount of the emulsifier system.

These additional surfactants may be nonionic, cationic or amphoteric surfactants. Examples of suitable nonionic surfactants are polyoxyethylene sorbitan esters, polyoxyethylene sorbitol esters, polyoxyalkylene fatty alcohol ethers, polyoxyalkylene fatty acid esters, alkoxylated glycerides, polyoxyethylene methyl glucoside ester, alkyl polyglucosides, EO-PO blockpolymers or combinations thereof.

Examples of cationic surfactants are esterquats, ditallow dimethyl ammonium chloride, C12/14 alkyl dimethyl benzyl ammonium chloride, alkyl dimethyl benzyl ammonium chloride, cetyl trimethyl ammonium chloride, stearyl trimethyl ammonium chloride, behenyl trimethyl ammonium chloride alkyl hydroxyethyl dimethyl ammonium chloride, distearyl dimethyl ammonium chloride, dihydrogenated tallow fatty alkyl dimethyl ammonium chloride or combinations thereof.

Examples of amphoteric surfactants are alkyl amphoacetate, alkyl amidopropyl betaine, alkyl amidopropyl dimethylamine betaine, undecylenamidopropyl betaine, alkyl dimethyl amine oxide.

The pH value of the emulsifier system can be adjusted by addition of acid or base, such as hydrochloric acid, sulfuric acid, sodium hydroxide or potassium hydroxide. Usually a pH value in the range of from pH 5 to pH 9 is desired.

The emulsifier system is slightly agitated at a temperature in a range of from 0°C and 60°C, preferably in a range of from 20°C to 50°C before the oil phase is added to the emulsifier system, so that the surfactants form micelles in the aqueous phase.

In a particularly preferred embodiment of the described method the emulsifier system is slightly heated to a temperature in the range of from 30°C and 45°C. The emulsifier system is preferably stirred with low shear. The stirring rate for low shear stirring is usually below 10000 rpm, particularly below 4000 rpm.

In the next step an oil phase comprising at least one superhydrophobic monomer and/or a hydrophobic monomer is added to the slightly stirred emulsifier system. The addition of the oil phase is carried out at temperatures between 0°C and 50°C, preferably between 15°C and 30°C. The oil phase is added slowly so that the viscosity of the reaction mixture increases continuously and the mixtures becomes gel-like.

Superhydrophobic monomers are monomers with a solubility in water at 20°C of less than 0.0001 wt.-%, particularly less than 0.00003 wt.-%, which is three orders of magnitude lower than the solubility of styrene in water.

Examples for superhydrophobic monomers are (C₁₀-C₂₆)-alkyl acrylates, or (C₁₀-C₂₆)-alkyl methacrylates such as lauryl acrylate, lauryl methacrylate, myristyl acrylate, myristyl methacrylate, palmityl acrylate, palmityl methacrylate, stearyl acrylate, stearyl methacrylate, and isobornyl acrylate. Further superhydrophobic monomers are fluorinated acrylate monomers.

Hydrophobic monomers according to the present invention are non-superhydrophobic monomers with a solubility in water of up to 5 wt.-% at 20°C.

Monomers with a water-solubility at 20°C of at least 5 wt.-% are hydrophilic monomers according to the present invention.

Examples for hydrophobic monomers are styrene, methyl acrylate, ethyl acrylate, n-propyl acrylate, iso-propyl acrylate, n-butyl acrylate, sec.-butyl acrylate, iso-butyl acrylate, tert.-butyl acrylate, n-hexyl acrylate, 2-ethyl hexyl acrylate, methyl methacrylate, ethyl methylacrylate, n-propyl methacrylate, iso-propyl methacrylate, n-butyl methacrylate, sec.-butyl methacrylate, iso-butyl methacrylate, tert.-butyl methacrylate, n-hexyl methacrylate, 2-ethyl hexyl methacrylate, benzyl acrylate, phenyl acrylate, benzyl methacrylate, phenyl methacrylate, vinyl acetate, and vinyl esters of versatic acid, such as VeoVa 9, 10 and 11, and ethylenic unsaturated silane monomers, such as metacryloxysilanes and vinylsilanes.

The superhydrophobic monomers and hydrophobic monomers are usually oils. They can be used as oil phase as such in the described method. The oil phase may comprise an organic solvent in addition. Suitable solvents are for example xylene, toluene, or solvent naphta. But preferably no solvent is present in the oil phase.

With the method described herein also miniemulsions comprising further co-monomers are available. The co-monomers are part of the oil-phase and are preferably added as monomer mixture together with the superhydrophobic and/or hydrophobic monomers to the emulsifier system. But the monomers can be also added separately.

Co-monomers are monomers different from superhydrophobic monomers and/or hydrophobic monomers and include hydrophilic monomers. Typical co-monomers are hydrophilic ethylenically unsaturated monomers.

The described method is particularly useful for the preparation of miniemulsions comprising superhydrophobic monomers and/or hydrophobic monomers suitable for the preparation of polymer dispersions by free-radical polymerization.

The oil phase optionally contains a stabilizer. Typical stabilizers are alkanes with 10 to 22 carbon atoms, preferably tetradecane, pentadecane, hexadecane, heptadecane, and octadecane. Alternatively, long alkyl chain alcohols can be employed as stabilizer in the oil phase. Typically long alkyl chain alcohols are (C₁₀-C₃₀-alkanols, such as for example cetyl alcohol. Polymeric stabilizers, such as polystyrene (PS), poly methyl methacrylate (PMMA) or Polyvinyl acetate (PVAc) can be used, also. The role of the stabilizer is to avoid diffusion driven changes of the droplet size distribution of the monomer emulsion.

The oil phase comprises from 5 wt.-% to 100 wt.- superhydrophobic monomers and/or hydrophobic monomers. Preferably the amount of superhydrophobic monomers and/or hydrophobic monomers in the oil phase is at least 20 wt.-%, more preferably more than 50 wt.-%, particularly more than 75 wt.-%. The content of optional co-monomers is the range of 0 wt.-% to 60 wt.-%, typically in the range of 1 wt.-% to 55 wt.-%, and preferably between 5 wt.-% and 50 wt.-%. The content of the optional stabilizer in the oil phase is up to 10 wt.-%, preferably between 0.1 wt.-% and 5 wt.-%.

To the oil phase certain amounts of the emulsifiers described above can be added additionally. The amount of the additional emulsifier, based on the total amount of the oil phase should be less than 10 wt.-%, particularly less than 5 wt.-%.

The gel-like mixture comprising the emulsifier system and the oil phase is subsequently diluted with an aqueous phase at a temperature between 0° and 50°C, preferably between 15°C and 30°C to achieve the desired miniemulsion. The dilution is carried out under slightly agitation (low shear stirring). The aqueous phase comprises preferably at least 50 wt.-% of water. A water content of the aqueous phase in the range of from 70 wt.-% to 100 wt.-% is preferred. Preferably deionized water (DI water) is used.

Typically the amount of emulsifier system, based on the total amount of the obtained miniemulsion, provided in step a) of the described method is in the range of from 1 wt.-% to 25 wt.-%, a range of from 3 wt.-% to 15 wt.-% is preferred. The amount of the oil phase added to the emulsifier system according to step b) of the method is typically in the range of from 5 wt.-% to 70 wt.-%, preferably in the range of from 15 wt.-% to 50 wt.-%. The aqueous phase in dilution step c) is used in an amount of from 25 wt.-% to 94 wt.-%, preferably in the range of from 40 wt.-% to 80 wt.-%, based on the total amount of the miniemulsion.

Phase transfer agents or polymer seeds are not required for the preparation of miniemulsions with the inventive method. Thus, typically no phase transfer agent or polymer seed is added to the emulsifier system, the oil phase or during the dilution step of the inventive method. Such compounds are also usually not applied in the subsequent polymerization of the miniemulsion. However, small amounts of polymer seed, usually less than 5 wt.-% based on the total amount of monomers, can be added to the miniemulsion in method step a), b) or c) or during the polymerization of the miniemulsion, if desired.

During the preparation or prior to the polymerization of the described miniemulsion a buffer system can be added. Known buffers are for example carbonate, phosphate, and/or borate buffers, such as potassium or sodium hydrogen phosphate or dihydrogenphosphate buffers. The buffer should be particularly compatible with the initiator system used in the free-radical polymerization of the miniemulsion.

Further chain transfer agents can be added during or after the preparation of the miniemulsion. Typical chain transfer agents are selected from thiols, disulfides, etc. Further examples are benzene, toluene, isopropyl benzene, isopropanol, chloroform, carbon tetrachloride or 1 butane thiol.

Without wishing to be bound by theory, the initial addition of the oil phase to the aqueous emulsifier leads to the formation of a swollen lamellar phase, which evolves under further oil-phase addition into a highly viscous and typically isotropic phase (gel formation, gel-like phase), most probably consisting of dense packed small oil droplets surrounded by a continuous aqueous phase, which gets into a miniemulsion upon dilution with water. The formation of a gel during the addition of the oil phase to the emulsifier system and the formation of a miniemulsion by diluting the gel-like mixture can be verified for example by X-ray scattering.

A further embodiment of the present invention are miniemulsions obtainable by the described method.

The obtained miniemulsions are oil-in-water miniemulsion comprising from
5 wt.-% to 70 wt.-%, preferably from 10 wt.-% to 60 wt.-% of an oil phase which comprises from
   5 wt.-% to 100 wt.-% of one or more superhydrophobic monomers and/or hydrophobic monomers and 0 wt.-% to 95 wt.-% of hydrophilic monomers, stabilized with
1 wt.-% to 25 wt.-%, preferably from 3 wt.-% to 15 wt.-% of an emulsifier system comprising from
   10 wt.-% to 90 wt.-% of at least one glucamide surfactant or mixtures thereof, or of a mixture of surfactants comprising at least 20 wt.-% and less than 100 wt.-% of the at least one glucamide surfactant and more than 0 wt.-% to 80 wt.-% of at least one anionic surfactant, and
   from 10 wt.-% to 90 wt.-% water, and
25 wt.-% to 94 wt.-%, preferably from 40 wt.-% to 80 wt.-% of additional water, wherein
the monomer droplets have a mean droplet diameter D₅₀ value in the range of from 50 to 1000 nm.

Miniemulsions according to the present invention are emulsions in which the particles of the dispersed phase have diameters in the range of from 50 nm to 1000 nm. The oil-in-water emulsions of the present invention comprise preferably droplets with a mean diameter in the range of from 50 nm to 800nm, preferably from 50 to 500 nm and particularly preferred from 100 to 300 nm.

The mean diameter is determined by laser light scattering, for example by using a Horiba LA 940 or Mastersizer 3000 from Malvern using the "Mie Scattering Theory" evaluation.

In case of droplets having axes of different length, such as droplets having the shape of an ellipsoid or of a disk, the largest axis determines the mean diameter.

The droplets of the present invention have a narrow particle size distribution of Gaussian shape. Preferably the standard deviation of the droplet size distribution is 40 % or less of the mean diameter. Preferably the standard deviation is between 20 % and 40 %

The miniemulsions according to the present invention are stable for at least 24 hours, often for several days, more often for several weeks. The stability of the miniemulsions can be assessed, for example, by visual inspection

The miniemulsions of the present invention may be used for the preparation of polymer dispersions, wherein the dispersed polymers comprising monomeric units derived from superhydrophobic and/or hydrophobic monomers.

The monomer or mixture of monomers in the dispersed oil phase of the miniemulsions can be polymerized under free radical polymerization conditions, preferably in the presence of a free radical initiator. The polymerization initiator may be either a water-soluble or an oil soluble compound.

Suitable free radical initiators are well known in the art and comprise for example, organic peroxides such as tert-butyl hydroperoxide, benzoyl peroxide, lauroyl peroxide, 2, 5-dimethyl 2,5-di (2-ethylhexanoylperoxy) hexane and dicumyl peroxide; inorganic persulfates such as potassium, sodium and/or ammonium persulfate ; and azo initiators such as azobis- (isobutyro nitrile) (AIBN) and azobis (1-cyclohexane-carbonitrile) ; and/or redox pairs such as those comprising Fe²⁺/H₂0₂, and/or K₂S₂0₈/Fe²⁺ either paired with for example ascorbic acid and/or one or more bisulfites.

The free-radical initiator may be added after, before and/or during the miniemulsification process described above. Preferably, the free-radical initiator is added after miniemulsification is completed.

The polymerization may be carried out over a broad temperature range depending on the choice of initiator, preferably from about 20 to about 90 C, more preferably from about 25 to about 80 C, for example about 70 C.

The polymerization is usually conducted over a period from about 10 min to about 24 hrs, more usually from about 2 to about 10 hours, most usually from about 2 to about 6 hours.

The aqueous polymer dispersions produced from the monomer miniemulsions of this invention may form polymer films after evaporation of the aqueous solvent, therefore they shall find use as binders in paints or coatings. Due to the incorporation of superhydrophobic and/or hydrophobic monomers, the binders may be used to enhance the barrier properties of paints and coatings, especially their water resistance.

### Examples:

| | |
|---|---|
| Hostaphat 1306 | = Phosphate ester of iso-tridecanol ethoxylate (100 wt.-%) |
| Glucotain Clear | = Capryloyl/Caproyl Methyl Glucamide (50 wt.-% aqueous solution) |
| Luperox TBH10X | = tert-Butyl hydroperoxide solution |

### Example 1: Preparation of a miniemulsion comprising superhydrophobic monomers

4.85 g of Phase A (emulsifier system 1 (ES1)) are poured in a 250 ml glass beaker and slightly warmed on a heating plate to a temperature of 35 to 40°C. The beaker is then taken from the heating plate and put on the bench at room temperature. The phase A is stirred with a frame stirrer powered with an IKA Eurostar 20 Digital overhead motor at 450 rpm.

**Table 1: Phase A**

| Emulsifier System (ES1) | wt.-% |
|---|---|
| Glycerol | 26.1 |
| Glucotain Clear (50% Capryloyl/Caproyl Methyl Glucamide) | 60.4 |
| Water | 0.5 |
| Hostaphat 1306 (Phosphate ester of iso-tridecanol ethoxylate) | 11.0 |

| | |
|---|---|
| pH value is adjusted to 7 with NaOH (50%) | |

Phase B containing 16.8 g isobornyl acrylate, 22.4 g of lauryl acrylate and 0.8 g methacrylic acid is added dropwise (addition ratio 800 ml/hour) at room temperature to the stirred Phase A so carefully that viscosity increases continuously and the mixture gets gel-like; at this point the rotation speed of the stirrer is increased to 900 rpm and the dropwise addition of Phase B is continued until is completed, yielding an almost transparent highly viscous gel, which is stirred for 30 seconds at a rotation speed of 1800 rpm.

50.15 g of deionized water are added (addition rate 7300 ml/hour) at room temperature to the gel under stirring to get a 40 wt.-% monomer miniemulsion with a D₅₀ value for the droplet size distribution (DSD) of 198 nm with a standard deviation of 70 nm.

### Method for the determination of the mean droplet size (mean diameter) D₅₀ value

The particle size analysis of the samples (miniemulsions and polymer dispersions) is carried out in a particle analyzer Horiba LA-960, using a refractive index of 1.48 - 0.00i for the disperse phase and 1.33 for the aqueous continuous phase. The particle size distribution (volume) is calculated from the analysis of the scattering data making use of the Mie scattering theory according to ISO 13320. The values of the mean droplet size (mean diameter) D₅₀ and the standard deviation are automatically calculated from the above mentioned distribution by the software of the instrument.

### Polymerization of the miniemulsion obtained from example 1:

The miniemulsion obtained as described in example 1 was heated under a flow of nitrogen to 70°C. 1.58 g of aqueous Luperox TBH70X (17.7 wt.-% in water) and 1.65 g of aqueous ascorbic acid (12.0 wt.-% in water) were added to the miniemulsion and the mixture was stirred for 2 hours at 70°C. The initiation of the polymerization reaction was detected after addition of the initiator system by rapid increase of the temperature of the reaction mixture. After polymerization, a low viscous bluish polymer dispersion was obtained with a D₅₀ value for the droplet size distribution (DSD) of 178 nm with a standard deviation of 60 nm.

## Claims

1. A method for preparing an oil-in-water miniemulsion comprising monomer droplets with a mean diameter in the range of from 50 to 1000 nm, wherein the method comprises the steps of
(a) stirring an emulsifier system comprising
(i) at least one glucamide surfactant, and
(ii) water,
and adjusting the temperature of the emulsifier system to a range between 0°C and 50°C,
(b) adding an oil phase to the emulsifier system (a), wherein the oil phase comprises at least 5 wt.-% to 100 wt.-% of one or more superhydrophobic monomers and/or hydrophobic monomers and 0 wt.-% to 60 wt.-% of hydrophilic monomers, until gel formation occurs, and
(c) diluting the gel obtained in step (b) with an aqueous phase under stirring at a temperature between 0°C and 50°C, wherein a miniemulsion comprising the superhydrophobic and/or hydrophobic monomers is obtained.

2. A method according to claim 1, wherein the emulsifier system is a mixture of surfactants comprising at least 20 wt.-% and less than 100 wt.-% of the at least one glucamide surfactant and more than 0 wt.-% to 80 wt.-% of at least one anionic surfactant.

3. A method according to claim 1, wherein the glucamide surfactant is selected from a compound of formula (I) 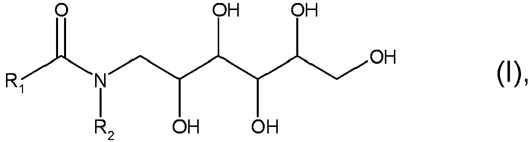 wherein
R₁ is alkyl, alkenyl, cycloalkyl, aryl or aralkyl group, and
R₂ is a linear or branched alkyl group or an aryl group.

4. A method according to claim 3, wherein R₁ is a linear or branched alkyl group comprising 4 to 21 carbon atoms or a linear or branched alkenyl group comprising 4 to 21 carbon atoms, and R₂ is a linear alkyl group comprising 1 to 8 carbon atoms or a phenyl group.

5. A method according to claim 4, wherein R₁ is a linear or branched alkyl group comprising 5 to 18 carbon atoms, and most preferably 5 to 9 carbon atoms, or a linear or branched alkenyl group comprising 5 to 18 carbon atoms, and most preferably 5 to 9 carbon atoms, and R₂ is a methyl, ethyl, propyl or butyl group and most preferred a methyl group.

6. A method according to any one of claims 2 to 5, wherein the at least one anionic surfactant is selected from the group of phosphate esters of alkoxylated aliphatic or aromatic alcohols.

7. A method according to any one of claims 2 to 6, wherein the at least one anionic surfactant is selected from the group of phosphate esters of a compound of formula (II)
H-(OA)ₘ-O-(CR₂)ₙ-CR₃ (II)
wherein
one, two or three of the residues R
are independently methyl or ethyl and
the remaining residues R
are hydrogen or
all residues R
are hydrogen,
the groups (OA)
are selected from the group of ethylene oxide, propylene oxide, butylene oxide and mixtures thereof,
m is an integer from 2 to 20, and
n is an integer from 5 to 21.

8. A method according to any one of claims 2 to 7, wherein the emulsifier system comprises at least one glucamide surfactant of formula (I), wherein R¹ is a linear alkyl group comprising 5 to 9 carbon atoms, preferably a mixture of linear alkyl groups comprising 5 or 7 carbon atoms, and R² is methyl, and at least one phosphate ester of ethoxylated aliphatic alkanol having 11 to 16 carbon atoms in the alkanol moiety, preferably at least one phosphate ester of iso-tridecanol ethoxylate.

9. A method according to any one of claims 1 to 8, wherein the oil phase comprises at least one superhydrophobic monomer selected from the group consisting of (C₁₀-C₂₆)-alkyl acrylate and (C₁₀-C₂₆)-alkyl methacrylate and fluorinated acrylate monomers.

10. A method according to any one of claims 1 to 9, wherein the superhydrophobic monomers are selected from the group consisting of lauryl acrylate, lauryl methacrylate, myristyl acrylate, myristyl methacrylate, palmityl acrylate, palmityl methacrylate, stearyl acrylate, stearyl methacrylate, isobornyl acrylate, and fluorinated acrylate monomers.

11. A method according to any one of claims 1 to 9, wherein the hydrophobic monomers are selected from the group consisting of styrene, methyl acrylate, ethyl acrylate, n-propyl acrylate, iso-propyl acrylate, n-butyl acrylate, sec.-butyl acrylate, iso-butyl acrylate, tert.-butyl acrylate, n-hexyl acrylate, 2-ethyl hexyl acrylate, methyl methacrylate, ethyl methylacrylate, n-propyl methacrylate, iso-propyl methacrylate, n-butyl methacrylate, sec.-butyl methacrylate, iso-butyl methacrylate, tert.-butyl methacrylate, n-hexyl methacrylate, 2-ethyl hexyl methacrylate, benzyl acrylate, phenyl acrylate, benzyl methacrylate, phenyl methacrylate, vinyl acetate, vinyl esters of versatic acid, and ethylenic unsaturated silane monomers.

12. A method according to any one of claims 1 to 11, wherein the pH value of emulsifier system is adjusted to 5 to 9.

13. A method according to any one of claims 1 to 12, wherein the emulsifier systems comprises at least one co-solvent selected from the group of methanol, ethanol, propanol, butanol, benzyl alcohol, ethylene glycol, di-ethylene glycol, propylene glycol, di-propylene glycol, glycerol, polyethylene glycol, polypropylene glycol, and mono-methyl ether or di-methyl ether of ethylene glycol or propylene glycol.

14. A method according to any one of claims 1 to 13, wherein the oil phase comprises a stabilizer.

15. A method for preparing a polymer dispersion comprising the method steps of any one of claims 1 to 14, wherein the miniemulsion is polymerized.

16. A miniemulsion obtainable by a method according to any one of claims 1 to 14 or a polymer dispersion obtainable by a method according to claim 15.

17. Use of the polymer dispersion according to claim 16 as a binder in paints or coatings.
